(19) **Europäisches Patentamt / European Patent Office / Office européen des brevets**

(11) **EP 2 986 939 B1**

(12) **FASCICULE DE BREVET EUROPEEN**

(45) Date de publication et mention
de la délivrance du brevet:
**10.04.2019 Bulletin 2019/15**

(21) Numéro de dépôt: **14722293.9**

(22) Date de dépôt: **18.04.2014**

(51) Int Cl.:
*G01C 21/12* *(2006.01)* *G01P 13/00* *(2006.01)*

(86) Numéro de dépôt international:
**PCT/FR2014/050950**

(87) Numéro de publication internationale:
**WO 2014/170618 (23.10.2014 Gazette 2014/43)**

(54) **PROCEDE D'ESTIMATION D'UNE ORIENTATION DE TRAJECTOIRE SUIVIE PAR UN PORTEUR D'UN CAPTEUR DE MOUVEMENTS, DISPOSITIF ET PROGRAMME D'ORDINATEUR CORRESPONDANTS**

VERFAHREN ZUR SCHÄTZUNG EINER TRAJEKTORIEORIENTIERUNG GEFOLGT VON EINEM BEWEGUNGSSENSORTRÄGER, ENTSPRECHENDE VORRICHTUNG UND COMPUTERPROGRAMM

METHOD FOR ESTIMATING A TRAJECTORY ORIENTATION FOLLOWED BY A MOVEMENT SENSOR CARRIER, CORRESPONDING DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2013 FR 1353616**

(43) Date de publication de la demande:
**24.02.2016 Bulletin 2016/08**

(73) Titulaires:
• **Commissariat à l'Énergie Atomique
et aux Énergies Alternatives
75015 Paris (FR)**
• **Movea
38000 Grenoble (FR)**

(72) Inventeur: **VILLIEN, Christophe
F-38170 Seyssinet-Pariset (FR)**

(74) Mandataire: **Bonnet, Michel
Cabinet Bonnet
93, rue Réaumur
75002 Paris (FR)**

(56) Documents cités:
**WO-A1-2013/022714 US-A1- 2012 072 166
US-A1- 2012 259 578 US-A1- 2012 296 603**

EP 2 986 939 B1

Printed by Jouve, 75001 PARIS (FR)

**Description**

La présente invention concerne un procédé d'estimation d'une orientation de trajectoire suivie par un porteur d'un capteur de mouvements. Elle concerne également un dispositif et un programme d'ordinateur correspondants.

Elle s'applique au domaine technique de la détection de mouvements et notamment à la localisation et au suivi « indoor » d'un système physique en mouvement et porteur d'un capteur de mouvements, par exemple la localisation à l'intérieur d'un bâtiment d'une personne portant un dispositif dans lequel est intégré ce capteur de mouvements. Parmi les technologies prometteuses, l'approche par mesure inertielle à l'aide d'un capteur de mouvements semble être la plus appropriée pour les applications grand public parce qu'elle est d'ores et déjà disponible auprès des utilisateurs potentiels dans certains téléphones mobiles et tablettes numériques.

L'invention s'applique donc plus particulièrement à un procédé d'estimation d'une orientation de trajectoire suivie par un porteur d'un capteur de mouvements comportant les étapes suivantes :

-    détermination d'une orientation du capteur de mouvements par rapport à la trajectoire suivie par le porteur,
-    estimation d'une orientation du capteur de mouvements par rapport à un repère fixe lié au référentiel terrestre à l'aide de mesures fournies par le capteur, et
-    estimation d'une orientation de la trajectoire suivie par le porteur par rapport au repère fixe à l'aide de l'orientation déterminée du capteur de mouvements par rapport à la trajectoire et de l'orientation estimée du capteur de mouvements par rapport au repère fixe.

Bien que perfectibles, tous les moyens nécessaires à la mise en oeuvre des étapes précitées, voire même au suivi complet d'une trajectoire à partir de la détermination de son orientation, sont bien connus et maîtrisés techniquement (mesure de cap, comptage de pas, etc.) à l'exception d'un seul : celui permettant de connaître de façon fiable l'orientation du capteur de mouvements par rapport à la trajectoire suivie par le système physique observé, c'est-à-dire le porteur du capteur. Ce problème de détermination de l'orientation du capteur de mouvements par rapport à la trajectoire est difficile à résoudre, les solutions étant rares et peu satisfaisantes.

Généralement, le capteur est alors attaché au porteur d'une façon telle que des hypothèses contraignantes peuvent être faites sur son orientation relative par rapport au porteur et donc par rapport à la trajectoire suivie par le porteur. Mais cette solution n'est pas satisfaisante pour des applications dans lesquelles le capteur est intégré dans un dispositif portable, téléphone mobile ou tablette numérique, destiné à être simplement porté sans attache particulière.

Dans le but de se libérer de ces hypothèses et contraintes, la demande de brevet publiée sous le numéro US 2012/0072166 A1 divulgue un procédé permettant d'estimer à chaque instant l'orientation relative du capteur par rapport à la trajectoire. Mais ce procédé impose d'autres hypothèses non moins contraignantes. En particulier, le procédé divulgué dans ce document consiste à projeter verticalement un repère lié au capteur de mouvements sur le repère fixe lié au référentiel terrestre. Comme détaillé en pages 2 et 3 de ce document, l'angle horizontal entre ce repère projeté et celui lié à la trajectoire est estimé par optimisation angulaire d'une accélération horizontale mesurée par le capteur.

L'hypothèse imposée par ce document est donc que l'accélération horizontale mesurée par le capteur de mouvements est maximale dans la direction horizontale de la trajectoire suivie par le système physique observé. Outre que cette hypothèse est elle-même contraignante, elle rend le procédé enseigné peu robuste car elle n'est pas réellement toujours vérifiée. En effet, dans le cas d'une application de suivi d'une personne qui se déplace en marchant, s'il est vrai que ses pieds suivent une accélération généralement orientée dans le sens de la trajectoire, il n'en est pas nécessairement de même des autres parties du corps de la personne observée. Notamment, le déplacement général de la personne, et donc d'une bonne partie de son corps, peut se faire à vitesse constante, c'est-à-dire à accélération nulle, de sorte que l'accélération horizontale mesurée par le capteur ne soit pas révélatrice du déplacement principal. En outre, à l'exception des pieds, les autres parties du corps de la personne peuvent être affectées par des mouvements parasites non liés à l'orientation de la trajectoire et peuvent engendrer des accélérations relativement importantes : c'est par exemple le cas des mouvements de balancier des bras.

De plus, toujours dans le cas d'une application de suivi d'une personne qui se déplace en marchant, le procédé mis en oeuvre dans le document US 2012/0072166 A1 ne permet pas d'estimer le sens de déplacement de la personne. Pour ce faire, d'autres traitements des signaux mesurés sont mis en oeuvre. Enfin, un autre inconvénient lié est la nécessité d'enregistrer un grand nombre de mesures préalablement au calcul, une estimation correcte de la trajectoire suivie par la personne n'étant obtenue qu'à partir d'une dizaine de pas. Cette estimation n'est donc pas réalisée en temps réel.

Il peut ainsi être souhaité de prévoir un procédé d'estimation d'une orientation de trajectoire qui permette de s'affranchir d'au moins une partie des problèmes et contraintes précités.

Il est donc proposé un procédé d'estimation d'une orientation de trajectoire suivie par un porteur d'un capteur de mouvements, comportant les étapes suivantes :

- détermination d'une orientation du capteur de mouvements par rapport à la trajectoire suivie par le porteur,
- estimation d'une orientation du capteur de mouvements par rapport à un repère fixe lié au référentiel terrestre à l'aide de mesures fournies par le capteur,
- estimation d'une orientation de la trajectoire suivie par le porteur par rapport au repère fixe à l'aide de l'orientation déterminée du capteur de mouvements par rapport à la trajectoire et de l'orientation estimée du capteur de mouvements par rapport au repère fixe,

comportant en outre les étapes suivantes :

- détection d'un début et d'une fin d'une phase de désorientation du capteur de mouvements par rapport à la trajectoire, et
- mise à jour, après la fin détectée de la phase de désorientation, de l'orientation déterminée du capteur de mouvements par rapport à la trajectoire à l'aide de l'orientation de la trajectoire par rapport au repère fixe telle qu'estimée au début détecté de la phase de désorientation et de l'orientation du capteur de mouvements par rapport au repère fixe telle qu'estimée après la fin détectée de la phase de désorientation.

Ainsi, à partir du moment où l'on dispose d'une valeur initiale d'orientation du capteur de mouvements par rapport à la trajectoire, sachant qu'il est techniquement simple de détecter des phases de désorientation du capteur de mouvements, il est avantageux de mettre simplement à jour l'orientation du capteur par rapport à la trajectoire de façon relative en fonction de sa dernière valeur connue, plutôt que de procéder à une estimation absolue complexe et hasardeuse, chaque fois qu'une désorientation est détectée. En effet, le principe de mise à jour proposé par l'invention, suppose simplement que la trajectoire suivie par le système physique observé porteur du capteur de mouvements est à orientation constante pendant la phase de désorientation du capteur, ce qui constitue une hypothèse astucieuse, réaliste et peu contraignante.

De façon optionnelle, une valeur préalable de l'orientation du capteur de mouvements par rapport à la trajectoire est prédéterminée par enregistrement d'une valeur saisie par un utilisateur ou connue par défaut.

De façon optionnelle également :

- plusieurs valeurs préalables de l'orientation du capteur de mouvements par rapport à la trajectoire sont prédéterminées par enregistrement de valeurs saisies par un utilisateur ou connues par défaut, chaque valeur préalable étant associée à une disposition prédéterminée possible du capteur, et
- l'une de ces valeurs préalables est sélectionnée à l'aide de mesures fournies par le capteur et caractéristiques des différentes dispositions prédéterminées possibles du capteur.

De façon optionnelle également, une valeur préalable de l'orientation du capteur de mouvements par rapport à la trajectoire est déterminée par estimation à l'aide d'une valeur préalable connue de l'orientation de la trajectoire par rapport au repère fixe et de l'orientation du capteur de mouvements par rapport au repère fixe telle qu'estimée à un instant initial.

De façon optionnelle également, un procédé d'estimation d'une orientation de trajectoire selon l'invention peut en outre comporter les étapes suivantes :

- estimation d'une vitesse du porteur à l'aide de mesures fournies par le capteur, et
- reconstruction de la trajectoire suivie par le porteur à l'aide de la vitesse estimée du porteur et de l'orientation estimée de la trajectoire suivie par le porteur par rapport au repère fixe.

De façon optionnelle également, le capteur de mouvements comportant un accéléromètre à trois axes de mesures, un magnétomètre à trois axes de mesures et un gyromètre à trois axes de mesures :

- l'estimation de l'orientation du capteur de mouvements par rapport au repère fixe est réalisée à l'aide des mesures fournies par l'accéléromètre, le magnétomètre et le gyromètre, et
- l'estimation de la vitesse du porteur est réalisée à l'aide des mesures fournies par l'accéléromètre.

De façon optionnelle également, l'orientation du capteur de mouvements par rapport au repère fixe telle qu'estimée après la fin détectée de la phase de désorientation est une valeur moyennée ou filtrée de manière à réduire un effet de fluctuations parasites du déplacement du porteur.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'estimation d'orientation selon l'invention, lorsque ledit programme est exécuté sur un ordinateur.

Il est également proposé un dispositif d'estimation d'une orientation de trajectoire suivie par un porteur, comportant :

- un capteur de mouvements destiné à être porté par le porteur,
- des moyens de stockage d'une valeur d'orientation du capteur de mouvements par rapport à la trajectoire suivie par le porteur, et
- un calculateur, relié au capteur de mouvements et aux moyens de stockage, programmé pour :

  • estimer une orientation du capteur de mouvements par rapport à un repère fixe lié au référentiel terrestre à l'aide de mesures fournies par le capteur, et
  • estimer une orientation de la trajectoire suivie par le porteur par rapport au repère fixe à l'aide de la valeur stockée d'orientation du capteur de mouvements par rapport à la trajectoire et de l'orientation estimée du capteur de mouvements par rapport au repère fixe,

ce dispositif comportant en outre un détecteur d'un début et d'une fin d'une phase de désorientation du capteur de mouvements par rapport à la trajectoire, et le calculateur étant en outre programmé pour mettre à jour, après la fin détectée de la phase de désorientation, la valeur stockée d'orientation du capteur de mouvements par rapport à la trajectoire à l'aide de l'orientation de la trajectoire par rapport au repère fixe telle qu'estimée au début détecté de la phase de désorientation et de l'orientation du capteur de mouvements par rapport au repère fixe telle qu'estimée après la fin détectée de la phase de désorientation.

De façon optionnelle, un dispositif d'estimation d'une orientation de trajectoire selon l'invention peut comporter une tablette numérique ou un téléphone mobile, le capteur de mouvements, les moyens de stockage et le calculateur étant intégrés dans cette tablette numérique ou ce téléphone mobile.

L'invention sera mieux comprise à l'aide de la description qui va suivre, donnée uniquement à titre d'exemple et faite en se référant aux dessins annexés dans lesquels :

- la figure 1 illustre une scène d'utilisation d'un dispositif d'estimation d'une orientation de trajectoire suivie par un système physique porteur d'un capteur de mouvements, en l'occurrence une personne,
- la figure 2 illustre un exemple de séquence de déplacement de la personne de la figure 1, présentant une phase de désorientation du dispositif qu'elle utilise pour estimer l'orientation de sa trajectoire,
- la figure 3 représente schématiquement la structure générale d'un dispositif d'estimation d'une orientation de trajectoire, par exemple celui de la figure 1, selon un mode de réalisation de l'invention, et
- la figure 4 illustre les étapes successives d'un procédé d'estimation d'une orientation de trajectoire suivie par un porteur de capteur de mouvements, selon un mode de réalisation de l'invention.

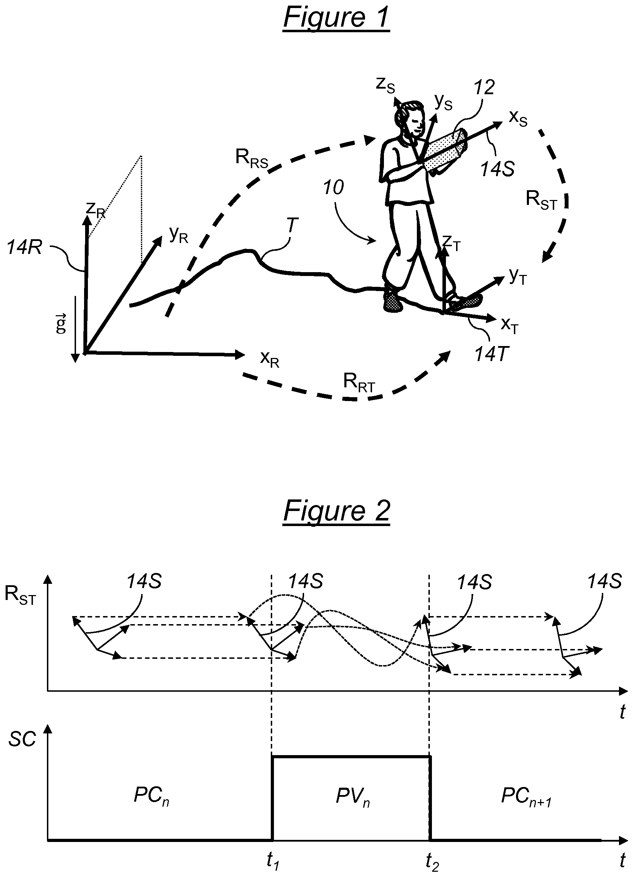

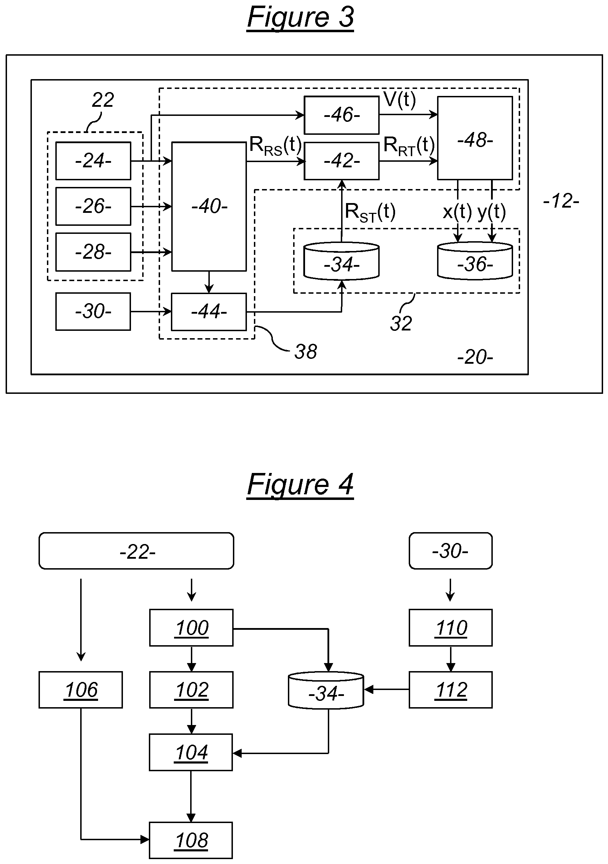

La scène illustrée sur la figure 1 représente un système physique 10, par exemple une personne, se déplaçant selon une trajectoire T et portant un dispositif 12 tel qu'une tablette numérique. La tablette numérique 12 est dotée d'un dispositif d'estimation d'une orientation de la trajectoire T suivie par la personne 10, plus précisément même d'un dispositif de détection et suivi de cette trajectoire T. Ce dispositif, muni d'un capteur de mouvements, sera détaillé en référence à la figure 3.

Dans cette scène, certains repères sont importants à identifier. Tout d'abord, un premier repère fixe 14R, lié au référentiel terrestre, présente trois axes orthogonaux $x_R$, $y_R$ et $z_R$. L'axe $z_R$ est vertical et dirigé vers le haut, c'est-à-dire dans le sens opposé du vecteur $\vec{g}$ représentant l'accélération gravitationnelle. Les deux autres axes horizontaux $x_R$ et $y_R$ sont par exemple orientés respectivement dans les directions Est et Nord. D'une façon générale, ce repère fixe 14R est lié aux grandeurs géophysiques aptes à être mesurées par le capteur de mouvements (accélération gravitationnelle et nord magnétique par exemple). Les coordonnées du vecteur $\vec{g}$ s'expriment ainsi sous la forme (0 ; 0 ; -9,81 m.s$^{-2}$) dans le repère fixe 14R. Un deuxième repère mobile 14S, lié à la tablette numérique 12, présente trois axes orthogonaux $x_S$, $y_S$ et $z_S$ définis par rapport à l'orientation du capteur de mouvements dans la tablette. Enfin, un troisième repère mobile 14T, lié à la trajectoire, présente trois axes orthogonaux $x_T$, $y_T$ et $z_T$ définis de la manière suivante : l'axe $x_T$ est tangent à la direction courante de la trajectoire T suivie par la personne 10 et est dans le plan horizontal ($x_R$ ; $y_R$) ; l'axe $y_T$ est orthogonal à l'axe $x_T$ dans le plan horizontal ($x_R$ ; $y_R$) et dirigé vers la gauche lorsque l'on regarde dans le sens du déplacement ; l'axe $z_T$ est, comme l'axe $z_R$, vertical et dirigé vers le haut.

L'objectif principal d'un procédé selon l'invention étant d'estimer à chaque instant l'orientation de la trajectoire T suivie par la personne 10 porteuse de la tablette numérique 12, en exprimant cette orientation dans le repère fixe 14R, cela revient à déterminer la matrice de changement de repère $R_{RT}$ permettant de passer de coordonnées exprimées dans le repère mobile 14T en coordonnées exprimées dans le repère fixe 14R. Cette matrice $R_{RT}$ peut aisément être déduite de deux autres matrices de changements de repères : la matrice de changement de repère $R_{RS}$ permettant de passer de coordonnées exprimées dans le repère mobile 14S en coordonnées exprimées dans le repère fixe 14R et la matrice de changement de repère $R_{ST}$ permettant de passer de coordonnées exprimées dans le repère mobile 14T en coordonnées exprimées dans le repère mobile 14S.

Connaissant la matrice $R_{RT}$, on peut alors déterminer aisément le sens et la direction du déplacement de la personne 10, ceux-ci étant définis par l'orientation de la trajectoire T.

Plus précisément, la matrice $R_{RT}$ peut être obtenue à l'aide du produit matriciel suivant :

$$R_{RT} = R_{RS} \cdot R_{ST} .$$

L'obtention de la matrice $R_{RS}$ est simple et bien connue. Cela revient à estimer l'orientation de la tablette numérique 12 (c'est-à-dire l'orientation du repère mobile 14S liée à son capteur de mouvements) par rapport au repère fixe 14R. Cela se fait à l'aide de mesures fournies par le capteur de mouvements.

Par exemple, lorsque le capteur de mouvements comporte un magnétomètre à trois axes de mesures et un accéléromètre à trois axes de mesures, l'accéléromètre mesure, dans son système d'axes qui est celui du repère mobile 14S, l'accélération $\vec{g}$ dont les coordonnées (0 ; 0 ; -9,81 m.s$^{-2}$) sont par ailleurs connues dans le repère fixe 14R. Le magnétomètre mesure, dans son système d'axes qui est également celui du repère mobile 14S, le champ magnétique terrestre dont les coordonnées (0 ; 20,767 $\mu$T ; -43,198 $\mu$T) sont par ailleurs connues dans le repère fixe 14R. La matrice de changement de repère $R_{RS}$ peut donc être estimée en appliquant les trois formules suivantes :

$$R_{RS}(:,1) = \frac{\langle Z_{ACC} \rangle \times \langle Z_{MAG} \rangle}{\|\langle Z_{ACC} \rangle \times \langle Z_{MAG} \rangle\|}, R_{RS}(:,3) = -\frac{\langle Z_{ACC} \rangle}{\|\langle Z_{ACC} \rangle\|} \ et \ R_{RS}(:,2) = R_{RS}(:,3) \times R_{RS}(:,1) .$$

Dans ces formules, l'expression $R_{RS}(:,i)$ représente la i-ème colonne de la matrice $R_{RS}$, $Z_{ACC}$ et $Z_{MAG}$ sont des vecteurs colonnes représentant respectivement les mesures vectorielles de l'accéléromètre et du magnétomètre, l'opérateur $\langle \rangle$ symbolise le fait que ces mesures sont filtrées ou moyennées afin de réduire l'influence du bruit, l'opérateur $\| \|$ symbolise la norme euclidienne et l'opérateur $\times$ symbolise le produit vectoriel. La première de ces formules exprime le fait que l'opposé de la mesure normée de l'accéléromètre est l'expression de $z_R$ dans le repère mobile 14S. La deuxième de ces formules exprime le fait que $y_R$ est par définition orthogonal à la pesanteur et au champ magnétique terrestre qui est horizontal, c'est-à-dire que $y_R$ est le produit vectoriel normé de ces deux grandeurs. Enfin, la troisième de ces formules exprime le fait que $x_R$ est par définition le produit vectoriel de $y_R$ et $z_R$.

Cette configuration du capteur de mouvements, dans laquelle il comporte un magnétomètre et un accéléromètre, est la configuration minimale permettant de déterminer complètement la matrice $R_{RS}$ dans l'exemple considéré, mais elle présente l'inconvénient d'être bruitée parce que les mesures qu'elle exploite sont généralement perturbées. Notamment l'accéléromètre est perturbé par des accélérations propres et le magnétomètre est bruité par les perturbations du champ magnétique terrestre.

D'autres configurations, par exemple dans lesquelles le capteur de mouvements comporte un gyromètre en plus du magnétomètre et de l'accéléromètre, permettent d'améliorer les performances de l'estimation de la matrice $R_{RS}$ en fusionnant les mesures à l'aide d'algorithmes dérivés du filtre de Kalman.

Plus généralement et sans ajouter d'enseignement particulier pour une mise en oeuvre de l'invention, d'autres configurations bien connues, n'incluant pas nécessairement un magnétomètre et un accéléromètre, peuvent être envisagées par l'homme du métier pour le calcul tout à fait classique de la matrice $R_{RS}$.

L'obtention de la matrice $R_{ST}$ est complexe et reste un problème mal résolu dans l'état de la technique, comme cela a été rappelé précédemment. Cela consiste, dans l'exemple illustré par la figure 1, à estimer une orientation du capteur de mouvements intégré dans la tablette numérique 12 par rapport à la trajectoire T suivie par la personne 10.

Plutôt que d'établir des hypothèses lourdes de conséquences et peu robustes comme dans le document US 2012/0072166 A1, il est simplement considéré dans la présente invention et comme illustré par la figure 2 que :

- une séquence de marche de la personne 10 de la figure 1, ou plus généralement une séquence de déplacement d'un système physique observable porteur d'un capteur de mouvements, peut être subdivisée en une succession de phases où l'orientation du capteur de mouvements est constante par rapport à la personne 10, donc par rapport à la trajectoire T puisqu'il peut être raisonnablement considéré que l'orientation de la personne 10 est très fortement corrélée à sa trajectoire T, et de phases où l'orientation du capteur de mouvements par rapport à la trajectoire T est variable,

- les phases au cours desquelles l'orientation du capteur de mouvement par rapport à la trajectoire T est variable sont limitées dans le temps et correspondent à des moments où la trajectoire T conserve une même orientation (i.e. pas de changement de cap pendant que la personne 10 modifie sa façon de porter la tablette numérique 12).

En outre, il peut être considéré qu'une orientation initiale du capteur de mouvements par rapport à la personne 10 est soit connue a priori, soit déterminable : il s'agit seulement d'un problème d'initialisation.

En conséquence, et dans l'exemple illustré sur la figure 2, au cours d'une phase $PC_n$ d'orientation constante de la tablette 12 et de son capteur de mouvements par rapport à la personne 10, il peut être considéré que le repère mobile 14S reste d'orientation constante par rapport au repère mobile 14T jusqu'à un instant $t_1$, cette orientation constante notée $R_{ST}(n)$ se traduisant par la relation :

$$\forall\, t \leq t_1, \qquad R_{ST}(t) = R_{ST}(n).$$

Au cours d'une phase suivante $PV_n$ de désorientation de la tablette 12 et de son capteur de mouvements par rapport à la personne 10, donc par rapport à sa trajectoire T, entre l'instant $t_1$ et un instant $t_2$, $R_{ST}(t)$ est variable donc a priori inconnue, mais le cap de la trajectoire T reste constant. Ceci se traduit par la relation :

$$\forall\, t, \qquad t_1 \leq t \leq t_2 \;\Longrightarrow\; R_{RT}(t) = R_{RT}(t_1) = R_{RT}(t_2).$$

Enfin, au cours d'une phase suivante $PC_{n+1}$ d'orientation de nouveau constante de la tablette 12 et de son capteur de mouvements par rapport à la personne 10, il peut être considéré que le repère mobile 14S reste de nouveau d'orientation constante par rapport au repère mobile 14T depuis l'instant $t_2$ jusqu'à une nouvelle désorientation de la tablette 12 (non illustrée), cette orientation constante notée $R_{ST}(n+1)$ se traduisant par la relation :

$$\forall\, t \geq t_2, \qquad R_{ST}(t) = R_{ST}(t_2) = R_{ST}(n+1).$$

Un signal de consigne SC peut accompagner la succession de phases d'orientation constante et de phases de désorientation, en prenant par exemple une valeur basse (par exemple « 0 ») en phase d'orientation constante et une valeur haute (par exemple « 1 ») en phase de désorientation.

Les passages de la valeur basse à la valeur haute et réciproquement du signal de consigne SC peuvent, dans un mode de réalisation particulièrement simple de l'invention, être commandés manuellement par le porteur 10 lui-même de la tablette numérique 12 lorsqu'il change celle-ci de position. En variante, ces instants $t_1$ et $t_2$ de transitions peuvent être détectés automatiquement, par exemple en détectant une variation, supérieure à un certain seuil, de la norme des mesures fournies par l'accéléromètre du capteur de mouvements ou de l'orientation du capteur de mouvements par rapport au repère fixe 14R.

Comme illustré schématiquement sur la figure 3, la tablette numérique 12 est dotée d'un dispositif 20 de détection et suivi de la trajectoire T suivie par la personne 10.

Ce dispositif de détection et suivi 20 comporte un capteur de mouvements 22. Avantageusement, le capteur de mouvements 22 comporte un accéléromètre 24 à trois axes de mesures, un magnétomètre 26 à trois axes de mesures et un gyromètre 28 à trois axes de mesures.

Le dispositif de détection et suivi 20 comporte en outre un détecteur 30 de débuts et de fins de phases de désorientation de la tablette numérique 12, et donc du capteur de mouvements 22, par rapport à la trajectoire T. Ce détecteur 30 est conçu pour fournir, comme indiqué précédemment, le signal de consigne SC. Il peut donc être, de façon optionnelle, relié au capteur de mouvements 22 pour l'analyse d'au moins une partie de ses mesures de manière à fournir automatiquement le signal de consigne SC.

Le dispositif de détection et suivi 20 comporte en outre des moyens 32 de stockage :

- d'une valeur d'orientation du capteur de mouvements 22 par rapport à la trajectoire T, cette valeur étant par exemple stockée dans une zone de mémoire 34 des moyens 32 sous la forme de la matrice de changement de repère $R_{ST}$ précédemment citée, et
- de coordonnées (x, y) de la trajectoire T exprimées dans le repère fixe 14R, ces coordonnées étant par exemple stockée dans une zone de mémoire 36 des moyens 32.

Le dispositif de détection et suivi 20 comporte en outre un calculateur 38, relié au capteur de mouvements 22 et aux moyens de stockage 32. Ce calculateur 38 peut par exemple être mis en oeuvre dans un module informatique comportant un processeur associé à une ou plusieurs mémoires pour le stockage de fichiers de données et de programmes d'ordinateurs. Il peut alors lui-même être considéré comme formée d'un processeur associé à une mémoire de stockage des instructions qu'il exécute sous forme de programmes d'ordinateurs.

Le calculateur 38 tel qu'illustré sur la figure 4 comporte ainsi fonctionnellement cinq programmes d'ordinateurs, ou cinq fonctions d'un même programme d'ordinateur, portant les références 40, 42, 44, 46 et 48. On notera en effet que les programmes d'ordinateurs 40, 42, 44, 46 et 48 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le module informatique mettant en oeuvre le calculateur 38 pourrait être remplacé par un dispositif électronique composé uniquement de circuits numériques (sans programme d'ordinateur) pour la réalisation des mêmes actions.

Un premier programme d'ordinateur 40 du calculateur 38 comporte des instructions de programme pour l'exécution d'une estimation, à chaque instant, d'une orientation de la tablette numérique 12 par rapport au repère fixe 14R à l'aide des mesures fournies par le capteur de mouvements 22. Il permet, selon le principe détaillé précédemment utilisant un filtre de Kalman étendu, de fournir une valeur $R_{RS}(t)$ à chaque instant t de la matrice de changement de repère $R_{RS}$.

Un deuxième programme d'ordinateur 42 du calculateur 38 comporte des instructions de programme pour l'exécution d'une estimation, à chaque instant, d'une orientation de la trajectoire T par rapport au repère fixe 14R à l'aide, d'une part, de la valeur $R_{ST}$, stockée en mémoire 34, d'orientation du capteur de mouvements 22 par rapport à la trajectoire T et, d'autre part, de l'orientation, estimée par le premier programme d'ordinateur 40, de la tablette numérique 12 (i.e. du capteur de mouvements 22) par rapport au repère fixe 14R. Il permet concrètement, selon la relation $R_{RT} = R_{RS} \cdot R_{ST}$, de fournir une valeur $R_{RT}(t)$ à chaque instant t de la matrice de changement de repère $R_{RT}$ en calculant le produit de la valeur $R_{RS}(t)$ fournie à l'instant t par l'exécution du premier programme 40 et d'une valeur $R_{ST}(t)$ extraite au même instant t de la matrice de changement de repère $R_{ST}$. La valeur $R_{ST}(t)$ est tout simplement la valeur courante de la matrice $R_{ST}$ stockée en mémoire 34.

Le problème d'initialisation consistant à déterminer préalablement une valeur de l'orientation du capteur de mouvements 22 par rapport à la trajectoire T et à enregistrer cette valeur sous la forme matricielle $R_{ST}$ en mémoire 34 peut être résolu de différentes façons.

Selon un premier mode de réalisation, une valeur préalable de l'orientation du capteur de mouvements 22 par rapport à la trajectoire T est considérée comme connue et directement enregistrée, sous la forme matricielle $R_{ST}$, en mémoire 34. Cet enregistrement peut être réalisé par défaut ou se faire par une saisie de la personne 10 sur une interface tactile de la tablette numérique 12. Ce premier mode de réalisation particulièrement simple est tout à fait réaliste. En effet, l'utilisation d'une application de navigation sur un téléphone mobile ou une tablette numérique telle que la tablette 12, application visée dans le cadre de l'invention, implique que la personne 10 effectue des actions avec le dispositif tenu à la main, l'écran face à elle. Par exemple, la personne 10 renseigne sa destination dans le cas d'une aide à la navigation, ou lance tout simplement son application. A cet instant, l'orientation du capteur de mouvements 22 par rapport à la personne 10 et donc à la trajectoire T envisagée est connue puisque le capteur de mouvements est tenu à la main, l'écran du dispositif faisant face à la personne 10. En particulier, les repères 14S et 14T peuvent être considérés comme alignés de sorte que la matrice $R_{ST}$ peut être initialisée à la matrice identité.

Selon un deuxième mode de réalisation, plusieurs valeurs préalables de l'orientation du capteur de mouvements 22 par rapport à la trajectoire T sont considérées comme possibles et directement enregistrées, sous la forme matricielle précitée, en mémoire 34. Ces enregistrements peuvent être réalisés par défaut ou se faire par des saisies de la personne 10 sur l'interface tactile de la tablette numérique 12. Dans ce cas, chaque valeur préalable est associée à une disposition prédéterminée possible du capteur de mouvements 22, et donc de la tablette numérique 12, par rapport à la trajectoire T. Dans une phase d'initialisation du dispositif de détection et suivi 20 de la tablette numérique 12, l'une de ces valeurs préalables, enregistrée sous la forme matricielle $R_{ST}$, peut être sélectionnée à l'aide d'au moins une partie des mesures fournies par le capteur de mouvements 22, notamment celles qui sont caractéristiques des différentes dispositions prédéterminées possibles de la tablette numérique 12 par rapport à la trajectoire T. Il peut être prévu d'identifier la phase d'initialisation par une valeur spécifique (par exemple « 2 ») du signal de consigne SC fourni par le détecteur 30.

Selon un troisième mode de réalisation, aucune valeur préalable de l'orientation du capteur de mouvements 22 par rapport à la trajectoire T n'est connue, mais une valeur préalable de l'orientation de la trajectoire T par rapport au repère fixe 14R est considérée comme connue. Ainsi, à un instant initial $t_0$ d'une phase d'initialisation du dispositif de détection et suivi 20 de la tablette numérique 12, la valeur $R_{RS}(t_0)$ de la matrice $R_{RS}$ fournie par le premier programme d'ordinateur 40 peut être exploitée en combinaison avec la valeur préalable $R_{RT}(t_0)$ de la matrice $R_{RT}$ connue, pour fournir, conformément à la relation $R_{RT} = R_{RS} \cdot R_{ST}$, une valeur préalable $R_{ST}$ de l'orientation du capteur de mouvements 22 par rapport à la trajectoire T selon le calcul suivant :

$$R_{ST} = R_{ST}(t_0) = [R_{RS}(t_0)]^{-1} \cdot R_{RT}(t_0).$$

On notera que la matrice $R_{RS}$ étant une matrice de changement de repère, c'est-à-dire une matrice de rotation, son inverse est également sa transposée, ce qui simplifie les calculs. On notera également que comme dans le deuxième mode de réalisation, il peut être prévu d'identifier la phase d'initialisation par une valeur spécifique du signal de consigne SC.

Dans le troisième mode de réalisation, l'initialisation peut aussi être réalisée avec un système de localisation de type GPS ou radio, à l'aide de deux positionnements successifs.

Enfin, il convient de noter que même si la matrice $R_{ST}$ n'est pas connue du tout à l'initialisation, ou que le cap de la trajectoire par rapport au repère fixe n'est pas connu du tout à l'initialisation, il est possible d'en prendre une valeur arbitraire. Dans ce cas, l'invention présente quand même un intérêt, puisqu'elle fournit malgré tout une trajectoire cohérente, dans un repère de cap absolu inconnu. Cela représente déjà une information très intéressante, car l'inconnue sur le cap pourra être résolue en introduisant par exemple d'autres modalités de mesure de position absolue, même si ces dernières sont imprécises, comme des localisations GPS ou radio.

Un troisième programme d'ordinateur 44 du calculateur 38 comporte des instructions de programme pour l'exécution d'une mise à jour, après la fin détectée de chaque phase de désorientation $PV_n$, de la valeur stockée, sous la forme matricielle $R_{ST}$ en mémoire 34, d'orientation du capteur de mouvements 22 par rapport à la trajectoire T.

Ce troisième programme d'ordinateur 44 fonctionne de la façon suivante. A l'instant détecté $t_1$ de début de la phase de désorientation $PV_n$, identifié par le passage de « 0 » à « 1 » du signal de consigne SC, la valeur $R_{RT}(t_1)$ fournie par le deuxième programme d'ordinateur 42, caractéristique de l'orientation de la trajectoire T par rapport au repère fixe 14R à cet instant $t_1$, est conservée en mémoire. A l'instant détecté $t_2$ de fin de la phase de désorientation $PV_n$, identifié par le passage de « 1 » à « 0 » du signal de consigne SC, la valeur $R_{RS}(t_2)$ fournie par le premier programme d'ordinateur 40, caractéristique de l'orientation du capteur de mouvements 22 par rapport au repère fixe 14R à cet instant $t_2$, est utilisée en combinaison avec la valeur $R_{RT}(t_1)$ conservée en mémoire pour fournir une mise à jour de $R_{ST}$ selon le calcul suivant :

$$R_{ST} = R_{ST}(t_2) = [R_{RS}(t_2)]^{-1} \cdot R_{RT}(t_2) = [R_{RS}(t_2)]^{-1} \cdot R_{RT}(t_1).$$

Il ressort clairement de l'équation précédente qu'il est supposé que la valeur de $R_{RT}$ est constante entre les instants $t_1$ et $t_2$ puisque la valeur $R_{RT}(t_2)$, inconnue, est remplacée par $R_{RT}(t_1)$. On remarque par ailleurs, que ce calcul est très proche de celui effectué dans le troisième mode de réalisation de la phase d'initialisation, de sorte qu'il est très simple d'adapter le troisième programme d'ordinateur 44 pour qu'il procède au calcul du troisième mode de réalisation de la phase d'initialisation lorsque le signal de consigne SC prend sa valeur spécifique « 2 ».

Un quatrième programme d'ordinateur 46 du calculateur 38 comporte des instructions de programme pour l'exécution d'une estimation de la vitesse de déplacement de la personne 10 le long de sa trajectoire T à l'aide d'au moins une partie des mesures fournies par le capteur de mouvements 22. Plus précisément, ce sont les mesures fournies par l'accéléromètre 24 qui sont exploitées par ce quatrième programme d'ordinateur 46 d'une façon connue en soi. Concrètement, à partir des mesures de l'accéléromètre 24, il est possible et connu de compter les pas de la personne 10 et d'estimer leur longueur afin d'en déduire une valeur V(t) de la vitesse de déplacement à chaque instant.

Un cinquième programme d'ordinateur 48 du calculateur 38 comporte des instructions de programme pour l'exécution d'une reconstruction complète de la trajectoire T suivie par la personne 10 à l'aide de la vitesse V(t), estimée à chaque instant t par le quatrième programme d'ordinateur 46, et à partir de l'orientation $R_{RT}(t)$ de la trajectoire T par rapport au repère fixe 14R, estimée à chaque instant t par le deuxième programme d'ordinateur 42. Cette reconstruction peut aussi exploiter des moyens annexes d'évaluation de la distance parcourue par la personne 10 en fonction du temps, tels que par exemple un podomètre. La reconstruction est géométrique et connue en soi. Elle permet de fournir à chaque instant t les coordonnées x(t) et y(t) de la trajectoire T exprimées dans le repère fixe 14R, celles-ci pouvant ensuite être enregistrées en mémoire 36.

Le capteur de mouvements 22, le détecteur 30 de phases de désorientation, les programmes 40, 42, 44 du calculateur 38 et la zone de mémoire 34 forment à eux seuls un dispositif d'estimation d'une orientation de la trajectoire T. C'est complétés des programmes 46, 48 et de la zone de mémoire 36 qu'ils forment de façon plus précise le dispositif complet de détection et suivi 20.

Selon une première variante de réalisation de ce qui a été décrit précédemment, l'effet des fluctuations parasites du déplacement de la personne 10 peut être réduit par lissage en procédant à un calcul de moyenne ou à un filtrage des mesures fournies par le capteur de mouvements 22 de manière à utiliser une forme moyennée de la matrice de changement de repère $R_{RS}$ plutôt que sa valeur instantanée, en particulier pour l'estimation de la valeur $R_{RS}(t_2)$ fournie par le premier programme d'ordinateur 40 à l'occasion de l'exécution du troisième programme d'ordinateur 44. Il convient de noter que le calcul d'une forme moyennée de la matrice R$_{RS}$ n'est pas un problème simple puisque les techniques habituelles de calcul de moyennes ou de filtrage ne sont pas nécessairement valides pour ce qui concerne les matrices de rotations. Par exemple, une moyenne arithmétique de plusieurs matrices de rotation n'est pas une matrice de rotation.

Ainsi, selon un premier mode de réalisation possible de cette première variante, le lissage est réalisé préalablement au calcul, par le premier programme d'ordinateur 40 et à un instant t, de la valeur R$_{RS}$(t) de la matrice de changement de repère R$_{RS}$ :

- en filtrant ou moyennant directement les signaux de mesures fournis par le capteur de mouvements 22 dans une fenêtre temporelle prédéterminée, par exemple une fenêtre glissante redéfinie à chaque instant t, et
- en ajustant les paramètres servant au calcul de la valeur R$_{RS}$(t) de la matrice de changement de repère R$_{RS}$, notamment les paramètres de covariances du filtre de Kalman utilisé.

Ce premier mode de réalisation permet bien d'éliminer les fluctuations parasites mais présente l'inconvénient de ne plus fournir de valeur instantanée de la matrice R$_{RS}$, celle-ci pouvant être pourtant utile pour d'autres fonctions du dispositif 20 ou plus généralement de la tablette numérique 12.

Selon un second mode de réalisation possible de la première variante, le lissage est réalisé postérieurement au calcul, par le premier programme d'ordinateur 40 et à un instant t, de la valeur R$_{RS}$(t) de la matrice de changement de repère R$_{RS}$.

Cela peut se faire en calculant une rotation moyenne exacte de plusieurs valeurs successives de R$_{RS}$(t) dans une fenêtre temporelle prédéterminée, selon des techniques connues de calculs de moyennes de matrices de rotation. Ces techniques connues sont malheureusement généralement complexes.

Cela peut aussi se faire plus simplement, en passant temporairement par un formalisme de quaternions, de la façon suivante :

- les valeurs successives de R$_{RS}$(t) à moyenner ou filtrer sont transformées en quaternions successifs selon une relation d'équivalence bien connue entre matrices et quaternions,
- une moyenne arithmétique ou un filtrage simple est réalisé sur les quaternions successifs, ce qui est une opération simple et bien connue compte tenu de l'écriture vectorielle des quaternions,
- une normalisation du quaternion moyenné ou filtré obtenu est exécutée (i.e. division de chaque coefficient du quaternion moyenné ou filtré par la norme euclidienne du quaternion par exemple), et
- le quaternion moyenné ou filtré et normalisé est transformé en matrice de rotation moyennée ou filtrée correspondante selon la relation d'équivalence précitée.

En effet, c'est la normalisation du quaternion moyenné ou filtré qui permet d'assurer que la matrice finalement obtenue par transformation inverse de ce quaternion est bien une matrice de rotation puisqu'il suffit de rendre le quaternion unitaire pour assurer qu'il corresponde bien à une rotation.

Selon une deuxième variante de réalisation de ce qui a été décrit précédemment, le deuxième programme d'ordinateur 42 est adapté pour imposer une contrainte au calcul de la valeur R$_{RT}$(t) à chaque instant t de la matrice de changement de repère R$_{RT}$. En effet, comme cela a été indiqué précédemment, si l'on considère que la trajectoire T est plane dans le repère fixe 14R, l'axe vertical z$_T$ du repère mobile 14T lié à la trajectoire T doit être aligné sur celui, z$_R$, du repère fixe 14R et les axes x$_T$, y$_T$ doivent être dans le plan (x$_R$, y$_R$). Or le simple produit des valeurs R$_{RS}$(t) et R$_{ST}$(t) ne permet pas de l'assurer.

Selon cette deuxième variante, on note $R_{RT}^* = R_{RS} \cdot R_{ST}$ et $R_{STI}$ la matrice de correction telle que $R_{RT} = R_{RT}^* \cdot R_{STI}$. Cette matrice de correction doit être définie de telle sorte que la matrice R$_{RT}$ prenne à chaque instant la forme suivante :

$$R_{RT} = \begin{bmatrix} cos\theta & -sin\theta & 0 \\ sin\theta & cos\theta & 0 \\ 0 & 0 & 1 \end{bmatrix},$$

où l'angle θ représente le cap de la trajectoire T à chaque instant tel qu'exprimé par rapport aux axes horizontaux x$_R$, y$_R$ du repère fixe 14R. En effet, les trois colonnes de la matrice R$_{RT}$ représentent respectivement les trois expressions des vecteurs unitaires des axes x$_T$, y$_T$ et z$_T$ dans le repère fixe 14R.

Selon un mode de réalisation possible de la deuxième variante, la matrice de correction $R_{STI}$ est définie comme le produit de deux matrices de rotation $R_X$ et $R_Y$ : $R_{STI} = R_X \cdot R_Y$. En notant x*$_T$, y*$_T$ et z*$_T$ les trois axes orthogonaux définis par les trois colonnes de la matrice R*$_{RT}$, la première de ces deux matrices $R_X$ exerce une rotation d'angle $\alpha$ autour de l'axe x*$_T$ ramenant l'axe y$_T$ dans le plan (x$_R$, y$_R$). Les trois axes orthogonaux x*$_T$, y*$_T$ et z*$_T$ deviennent alors x*$_T$, y*'$_T$ et z*'$_T$. La deuxième de ces deux matrices $R_Y$ exerce une rotation d'angle $\beta$ autour de l'axe y*'$_T$ ramenant l'axe x$_T$ dans le plan (x$_R$, y$_R$). Les trois axes orthogonaux x*$_T$, y*'$_T$ et z*'$_T$ deviennent alors les axes x$_T$, y$_T$ et z$_T$ de la matrice R$_{RT}$.

On montre aisément que l'expression de la matrice $R_X$ est donnée par :

$$R_X = \begin{bmatrix} 1 & 0 & 0 \\ 0 & cos\alpha & -sin\alpha \\ 0 & sin\alpha & cos\alpha \end{bmatrix},$$

où $\quad = tan^{-1}\left(\frac{R_{RT}^*(3,2)}{R_{RT}^*(3,3)}\right)$, R*$_{RT}$(3,2) et R*$_{RT}$(3,3) étant les coefficients de 3$^e$ ligne, 2$^e$ et 3$^e$ colonnes de la matrice R*$_{RT}$ obtenue par le produit $R_{RT}^* = R_{RS} \cdot R_{ST}$.

On montre de même aisément que l'expression de la matrice $R_Y$ est donnée par :

$$R_Y = \begin{bmatrix} cos\beta & 0 & sin\beta \\ 0 & 1 & 0 \\ -sin\beta & 0 & cos\beta \end{bmatrix},$$

où $\quad = tan^{-1}\left(\frac{R_{RT}^{*\prime}(3,1)}{R_{RT}^{*\prime}(3,3)}\right)$, R*'$_{RT}$(3,1) et R*'$_{RT}$(3,3) étant les coefficients de 3$^e$ ligne, 1$^e$ et 3$^e$ colonnes de la matrice R*'$_{RT}$ obtenue par le produit $R_{RT}^{*\prime} = R_{RT}^* \cdot R_X$.

Conformément au mode de réalisation ci-dessus de la deuxième variante, le deuxième programme d'ordinateur 42 est donc adapté pour calculer à chaque instant t la valeur R$_{RT}$(t) de la matrice R$_{RT}$ à l'aide des produits successifs suivants :

$$R_{RT}(t) = R_{RS}(t) \cdot R_{ST}(t) \cdot R_X(t) \cdot R_Y(t).$$

Le fonctionnement du dispositif de détection et suivi 20 va maintenant être détaillé en référence à la figure 4 qui illustre les étapes successives d'un procédé qu'il peut mettre en oeuvre conformément à l'invention.

Au cours d'une première étape 100 d'initialisation identifiée par la valeur spécifique à « 2 » du signal de consigne SC, une valeur préalable R$_{ST}$ de l'orientation du capteur de mouvements 22 par rapport à la trajectoire T est déterminée conformément à l'un des trois modes de réalisation de la phase d'initialisation décrite précédemment. Dans les deuxième et troisième modes de réalisation, cette étape peut être réalisée par exécution du troisième programme d'ordinateur 44 à l'aide d'au moins une partie des mesures fournies par le capteur de mouvements 22.

Au cours d'une étape suivante 102 d'exécution du premier programme d'ordinateur 40, l'orientation à un instant t, notée R$_{RS}$(t), du capteur de mouvements 22 par rapport au repère fixe 14R est estimée à l'aide des mesures fournies par l'accéléromètre 24, le magnétomètre 26 et le gyromètre 28. Comme indiqué précédemment, cette estimation peut être moyennée ou filtrée.

Au cours d'une étape suivante 104 d'exécution du deuxième programme d'ordinateur 42, l'orientation à l'instant t, notée R$_{RT}$(t), de la trajectoire T par rapport au repère fixe 14R est estimée à l'aide de la valeur courante de R$_{ST}$ enregistrée en mémoire 34 et de l'orientation R$_{RS}$(t) estimée à l'étape 102. Cela peut se faire par la relation $R_{RT}(t) = R_{RS}(t) \cdot R_{ST}(t)$ ou par la relation $R_{RT}(t) = R_{RS}(t) \cdot R_{ST}(t) \cdot R_X(t) \cdot R_Y(t)$.

Au cours d'une étape 106 d'exécution du quatrième programme d'ordinateur 46, la vitesse de déplacement à l'instant t, notée V(t), de la personne 10 est estimée à l'aide des mesures fournies par l'accéléromètre 24. On notera que cette étape s'exécute indépendamment des étapes 102 et 104, et parallèlement à ces étapes.

Enfin, au cours d'une étape 108 d'exécution du cinquième programme d'ordinateur 48, cette étape suivant nécessairement les étapes 104 et 106, les coordonnées à l'instant t de la trajectoire T exprimées dans le repère fixe 14R, notées x(t) et y(t), sont estimées à l'aide de l'orientation R$_{RT}$(t) estimée à l'étape 104 et de la vitesse V(t) estimée à l'étape 106. Ces coordonnées x(t) et y(t) sont enregistrées en mémoire 36 de manière à reconstruire la trajectoire T dans le repère 14R.

Parallèlement et indépendamment des étapes 102, 104, 106 et 108, une mise à jour de la valeur $R_{ST}$ d'orientation du capteur de mouvements 22 par rapport à la trajectoire T est automatiquement déclenchée sur détection, au cours d'une étape 110, du passage de « 0 » à « 1 » du signal de consigne SC fourni par le détecteur 30, ce passage de « 0 » à « 1 » indiquant le début d'une phase de désorientation du capteur de mouvements 22 par rapport à la trajectoire T.

Au cours d'une étape suivante d'exécution du troisième programme d'ordinateur 44, la valeur $R_{ST}$ d'orientation du capteur de mouvements 22 par rapport à la trajectoire T est mise à jour en fin de phase de désorientation, après détection du passage de « 1 » à « 0 » du signal de consigne SC, selon les calculs présentés précédemment.

Il apparaît clairement qu'un dispositif de détection et suivi de trajectoire tel que celui décrit précédemment permet un suivi simple et astucieux de l'orientation d'un capteur de mouvements porté par un système physique en déplacement par rapport à la trajectoire suivie par ce système physique, ce qui permet ensuite d'estimer aisément l'orientation de cette trajectoire par rapport à un repère fixe lié à des grandeurs mesurables par le capteur de mouvements.

On notera par ailleurs que l'invention n'est pas limitée au mode de réalisation décrit précédemment.

Ainsi en variante, la tablette numérique peut être remplacée par tout support, téléphone mobile ou autre, pouvant intégrer un dispositif de détection et suivi de trajectoire, ou plus généralement un dispositif d'estimation d'orientation de trajectoire, tel que celui décrit précédemment et pouvant être porté par le système physique dont le déplacement est observé.

En variante également, la représentation des différentes orientations définies précédemment s'est faite sous forme matricielle, à l'aide de matrices de changements de repères. Mais elle pourrait également faire appel à d'autres formalismes tels que les quaternions, les angles ou autres.

Il apparaîtra plus généralement à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé d'estimation d'une orientation ($R_{RT}$) de trajectoire (T) suivie par un porteur (10) d'un capteur de mouvements (22), comportant les étapes suivantes :

   - détermination (100) d'une orientation ($R_{ST}$) du capteur de mouvements (22) par rapport à la trajectoire (T) suivie par le porteur (10),
   - estimation (102) d'une orientation ($R_{RS}$) du capteur de mouvements (22) par rapport à un repère fixe (14R) lié au référentiel terrestre à l'aide de mesures fournies par le capteur,
   - estimation (104) d'une orientation ($R_{RT}$) de la trajectoire (T) suivie par le porteur (10) par rapport au repère fixe (14R) à l'aide de l'orientation déterminée ($R_{ST}$) du capteur de mouvements (22) par rapport à la trajectoire (T) et de l'orientation estimée ($R_{RS}$) du capteur de mouvements (22) par rapport au repère fixe (14R),

   **caractérisé en ce que** qu'il comporte en outre les étapes suivantes :

   - détection (110) d'un début ($t_1$) et d'une fin (t2) d'une phase ($PV_n$) de désorientation du capteur de mouvements (22) par rapport à la trajectoire (T), et
   - mise à jour (112), après la fin détectée ($t_2$) de la phase de désorientation ($PV_n$), de l'orientation déterminée ($R_{ST}$) du capteur de mouvements (22) par rapport à la trajectoire (T) à l'aide de l'orientation ($R_{RT}$) de la trajectoire (T) par rapport au repère fixe (14R) telle qu'estimée au début détecté ($t_1$) de la phase de désorientation ($PV_n$) et de l'orientation ($R_{RS}$) du capteur de mouvements (22) par rapport au repère fixe (14R) telle qu'estimée après la fin détectée ($t_2$) de la phase de désorientation ($PV_n$).

2. Procédé d'estimation d'une orientation ($R_{RT}$) de trajectoire (T) selon la revendication 1, dans lequel une valeur préalable de l'orientation ($R_{ST}$) du capteur de mouvements (22) par rapport à la trajectoire (T) est prédéterminée (100) par enregistrement d'une valeur saisie par un utilisateur ou connue par défaut.

3. Procédé d'estimation d'une orientation ($R_{RT}$) de trajectoire (T) selon la revendication 1, dans lequel :

   - plusieurs valeurs préalables de l'orientation ($R_{ST}$) du capteur de mouvements (22) par rapport à la trajectoire (T) sont prédéterminées (100) par enregistrement de valeurs saisies par un utilisateur ou connues par défaut, chaque valeur préalable étant associée à une disposition prédéterminée possible du capteur (22), et
- l'une de ces valeurs préalables est sélectionnée (100) à l'aide de mesures fournies par le capteur (22) et caractéristiques des différentes dispositions prédéterminées possibles du capteur.

4. Procédé d'estimation d'une orientation ($R_{RT}$) de trajectoire (T) selon la revendication 1, dans lequel une valeur préalable de l'orientation ($R_{ST}$) du capteur de mouvements (22) par rapport à la trajectoire (T) est déterminée par estimation à l'aide d'une valeur préalable connue de l'orientation ($R_{RT}$) de la trajectoire (T) par rapport au repère fixe (14R) et de l'orientation ($R_{RS}$) du capteur de mouvements (22) par rapport au repère fixe (14R) telle qu'estimée à un instant initial.

5. Procédé d'estimation d'une orientation ($R_{RT}$) de trajectoire (T) selon l'une quelconque des revendications 1 à 4, comportant en outre les étapes suivantes :

   - estimation (106) d'une vitesse du porteur (10) à l'aide de mesures fournies par le capteur (22), et
   - reconstruction (108) de la trajectoire (T) suivie par le porteur (10) à l'aide de la vitesse estimée du porteur et de l'orientation ($R_{RT}$) estimée de la trajectoire (T) suivie par le porteur (10) par rapport au repère fixe (14R).

6. Procédé d'estimation d'une orientation ($R_{RT}$) de trajectoire (T) selon la revendication 5, dans lequel, le capteur de mouvements (22) comportant un accéléromètre (24) à trois axes de mesures, un magnétomètre (26) à trois axes de mesures et un gyromètre (28) à trois axes de mesures :

   - l'estimation (102) de l'orientation ($R_{RS}$) du capteur de mouvements (22) par rapport au repère fixe (14R) est réalisée à l'aide des mesures fournies par l'accéléromètre (24), le magnétomètre (26) et le gyromètre (28), et
   - l'estimation (106) de la vitesse du porteur (10) est réalisée à l'aide des mesures fournies par l'accéléromètre (24).

7. Procédé d'estimation d'une orientation ($R_{RT}$) de trajectoire (T) selon l'une quelconque des revendications 1 à 6, dans lequel l'orientation ($R_{RS}$) du capteur de mouvements (22) par rapport au repère fixe (14R) telle qu'estimée après la fin détectée ($t_2$) de la phase de désorientation ($PV_n$) est une valeur moyennée ou filtrée de manière à réduire un effet de fluctuations parasites du déplacement du porteur (10).

8. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'estimation d'orientation selon l'une quelconque des revendications 1 à 7, lorsque ledit programme est exécuté sur un ordinateur.

9. Dispositif d'estimation d'une orientation ($R_{RT}$) de trajectoire (T) suivie par un porteur (10), comportant :

   - un capteur de mouvements (22) destiné à être porté par le porteur (10),
   - des moyens (32) de stockage d'une valeur d'orientation ($R_{ST}$) du capteur de mouvements (22) par rapport à la trajectoire (T) suivie par le porteur (10), et
   - un calculateur (38), relié au capteur de mouvements (22) et aux moyens de stockage (32), programmé pour :

     • estimer une orientation ($R_{RS}$) du capteur de mouvements (22) par rapport à un repère fixe (14R) lié au référentiel terrestre à l'aide de mesures fournies par le capteur, et
     • estimer une orientation ($R_{RT}$) de la trajectoire (T) suivie par le porteur (10) par rapport au repère fixe (14R) à l'aide de la valeur stockée d'orientation ($R_{ST}$) du capteur de mouvements (22) par rapport à la trajectoire (T) et de l'orientation estimée ($R_{RS}$) du capteur de mouvements (22) par rapport au repère fixe (14R),

   **caractérisé en ce que** qu'il comporte en outre un détecteur (30) d'un début ($t_1$) et d'une fin ($t_2$) d'une phase ($PV_n$) de désorientation du capteur de mouvements (22) par rapport à la trajectoire (T), et **en ce que** le calculateur (38) est en outre programmé pour mettre à jour, après la fin détectée ($t_2$) de la phase de désorientation ($PV_n$), la valeur stockée d'orientation ($R_{ST}$) du capteur de mouvements (22) par rapport à la trajectoire (T) à l'aide de l'orientation ($R_{RT}$) de la trajectoire (T) par rapport au repère fixe (14R) telle qu'estimée au début détecté ($t_1$) de la phase de désorientation ($PV_n$) et de l'orientation ($R_{RS}$) du capteur de mouvements (22) par rapport au repère fixe (14R) telle qu'estimée après la fin détectée ($t_2$) de la phase de désorientation ($PV_n$).

10. Tablette numérique (12) ou un téléphone mobile comportant le dispositif d'estimation d'une orientation (RRT) de trajectoire (T) selon la revendication 9. Le capteur de mouvements (22), les moyens de stockage (32) et le calculateur (38) étant intégrés dans cette tablette numérique ou ce téléphone mobile.

**Patentansprüche**

1. Verfahren zum Schätzen einer Orientierung ($R_{RT}$) einer Bahn (T), der ein Träger (10) eines Bewegungssensors (22) folgt, umfassend die folgenden Schritte:

   - Bestimmen (100) einer Orientierung ($R_{ST}$) des Bewegungssensors (22) in Bezug auf die Bahn (T), der der Träger (10) folgt,
   - Schätzen (102) einer Orientierung ($R_{RS}$) des Bewegungssensors (22) in Bezug auf einen festen Bezugspunkt (14R), der mit dem terrestrischen Bezugssystem verbunden ist, mithilfe von Messungen, die der Sensor liefert,
   - Schätzen (104) einer Orientierung ($R_{RT}$) der Bahn (T), der der Träger (10) folgt, in Bezug auf den festen Bezugspunkt (14R) mithilfe der bestimmten Orientierung ($R_{ST}$) des Bewegungssensors (22) in Bezug auf die Bahn (T), und der geschätzten Orientierung ($R_{RS}$) des Bewegungssensors (22) in Bezug auf den festen Bezugspunkt (14R),

   **dadurch gekennzeichnet, dass** es weiter die folgenden Schritte umfasst:

   - Erkennen (110) eines Beginns ($t_1$) und eines Endes ($t_2$) einer Phase ($PV_n$) von Orientierungslosigkeit des Bewegungssensors (22) in Bezug auf die Bahn (T), und
   - Aktualisieren (112), nach dem erkannten Ende ($t_2$) der Phase von Orientierungslosigkeit ($PV_n$), der bestimmten Orientierung ($R_{ST}$) des Bewegungssensors (22) in Bezug auf die Bahn (T) mithilfe der Orientierung ($R_{RT}$) der Bahn (T) in Bezug auf den festen Bezugspunkt (14R) so, wie am erkannten Beginn ($t_1$) der Phase von Orientierungslosigkeit ($PV_n$) geschätzt, und der Orientierung ($R_{RS}$) des Bewegungssensors (22) in Bezug auf den festen Bezugspunkt (14R) so, wie nach dem erkannten Ende ($t_2$) der Phase von Orientierungslosigkeit ($PV_n$) geschätzt.

2. Verfahren zum Schätzen einer Orientierung ($R_{RT}$) einer Bahn (T) nach Anspruch 1, wobei ein vorhergehender Wert der Orientierung ($R_{ST}$) des Bewegungssensors (22) in Bezug auf die Bahn (T) durch Aufzeichnung eines Werts, der von einem Benutzer erfasst wird oder standardmäßig bekannt ist, vorbestimmt (100) wird.

3. Verfahren zum Schätzen einer Orientierung ($R_{RT}$) einer Bahn (T) nach Anspruch 1, wobei:

   - mehrere vorhergehende Werte der Orientierung ($R_{ST}$) des Bewegungssensors (22) in Bezug auf die Bahn (T) durch Aufzeichnen von Werten, die von einem Benutzer erfasst werden oder standardmäßig bekannt sind, vorbestimmt (100) werden, wobei jeder vorhergehende Wert mit einer vorbestimmten möglichen Anordnung des Sensors (22) assoziiert ist, und
   - einer dieser vorhergehenden Werte mithilfe von Messungen ausgewählt (100) wird, die der Sensor (22) liefert und die für die verschiedenen vorbestimmten möglichen Anordnungen des Sensors charakteristisch sind.

4. Verfahren zum Schätzen einer Orientierung ($R_{RT}$) einer Bahn (T) nach Anspruch 1, wobei ein vorhergehender Wert der Orientierung ($R_{ST}$) des Bewegungssensors (22) in Bezug auf die Bahn (T) durch Schätzen mithilfe eines bekannten vorhergehenden Werts der Orientierung ($R_{RT}$) der Bahn (T) in Bezug auf den festen Bezugspunkt (14R), und der Orientierung ($R_{RS}$) des Bewegungssensors (22) in Bezug auf den festen Bezugspunkt (14R) so, wie zu einem ursprünglichen Zeitpunkt geschätzt, bestimmt wird.

5. Verfahren zum Schätzen einer Orientierung ($R_{RT}$) einer Bahn (T) nach einem der Ansprüche 1 bis 4, weiter die folgenden Schritte umfassend:

   - Schätzen (106) einer Geschwindigkeit des Trägers (10) mithilfe von Messungen, die der Sensor (22) liefert, und
   - Rekonstruieren (108) der Bahn (T), der der Träger (10) folgt, mithilfe der geschätzten Geschwindigkeit des Trägers und der geschätzten Orientierung ($R_{RT}$) der Bahn (T), der der Träger (10) in Bezug auf den festen Bezugspunkt (14R) folgt.

6. Verfahren zum Schätzen einer Orientierung ($R_{RT}$) einer Bahn (T) nach Anspruch 5, wobei, wenn der Bewegungssensor (22) einen Beschleunigungsmesser (24) mit drei Messachsen, ein Magnetometer (26) mit drei Messachsen

13

und ein Gyrometer (28) mit drei Messachsen umfasst:

- das Schätzen (102) der Orientierung ($R_{RS}$) des Bewegungssensors (22) in Bezug auf den festen Bezugspunkt (14R) mithilfe der Messungen ausgeführt wird, die der Beschleunigungsmesser (24), das Magnetometer (26) und das Gyrometer (28) liefern, und
- das Schätzen (106) der Geschwindigkeit des Trägers (10) mithilfe der Messungen ausgeführt wird, die der Beschleunigungsmesser (24) liefert.

7. Verfahren zum Schätzen einer Orientierung ($R_{RT}$) einer Bahn (T) nach einem der Ansprüche 1 bis 6, wobei die Orientierung ($R_{RS}$) des Bewegungssensors (22) in Bezug auf den festen Bezugspunkt (14R) so, wie nach dem erkannten Ende ($t_2$) der Phase von Orientierungslosigkeit ($PV_n$) geschätzt, ein gemittelter oder gefilterter Wert ist, um eine Auswirkung von störenden Schwankungen der Bewegung des Trägers (10) zu verringern.

8. Computerprogramm, das aus einem Kommunikationsnetz herunterladbar und/oder auf einem computerlesbaren Träger aufgezeichnet und/oder von einem Prozessor ausführbar ist, **dadurch gekennzeichnet, dass** es Anweisungen für das Ausführen der Schritte eines Orientierungsschätzungsverfahrens nach einem der Ansprüche 1 bis 7 umfasst, wenn das Programm auf einem Computer ausgeführt wird.

9. Vorrichtung zum Schätzen einer Orientierung ($R_{RT}$) einer Bahn (T), der ein Träger (10) folgt, umfassend:

- einen Bewegungssensor (22), der dazu bestimmt ist, vom Träger (10) getragen zu werden,
- Mittel (32) zum Speichern eines Orientierungswerts ($R_{ST}$) des Bewegungssensors (22) in Bezug auf die Bahn (T), der der Träger (10) folgt, und
- einen mit dem Bewegungssensor (22) und den Speichermitteln (32) verbundenen Rechner (38), der dafür programmiert ist:

  • eine Orientierung ($R_{RS}$) des Bewegungssensors (22) in Bezug auf einen festen Bezugspunkt (14R), der mit dem terrestrischen Bezugssystem verbunden ist, mithilfe von Messungen zu schätzen, die der Sensor liefert, und
  • eine Orientierung ($R_{RT}$) der Bahn (T), der der Träger (10) in Bezug auf den festen Bezugspunkt (14R) folgt, mithilfe des gespeicherten Orientierungswerts ($R_{ST}$) des Bewegungssensors (22) in Bezug auf die Bahn (T), und der geschätzten Orientierung ($R_{RS}$) des Bewegungssensors (22) in Bezug auf den festen Bezugspunkt (14R) zu schätzen,

**dadurch gekennzeichnet, dass** sie weiter einen Detektor (30) eines Beginns ($t_1$) und eines Endes ($t_2$) einer Phase ($PV_n$) von Orientierungslosigkeit des Bewegungssensors (22) in Bezug auf die Bahn (T) umfasst, und dadurch, dass der Rechner (38) weiter dafür programmiert ist, nach dem erkannten Ende ($t_2$) der Phase von Orientierungslosigkeit ($PV_n$) den gespeicherten Orientierungswert ($R_{ST}$) des Bewegungssensors (22) in Bezug auf die Bahn (T) mithilfe der Orientierung ($R_{RT}$) der Bahn (T) in Bezug auf den festen Bezugspunkt (14R) so, wie zum erkannten Beginn ($t_1$) der Phase von Orientierungslosigkeit ($PV_n$) geschätzt, und der Orientierung ($R_{RS}$) des Bewegungssensors (22) in Bezug auf den festen Bezugspunkt (14R) so, wie nach dem erkannten Ende ($t_2$) der Phase von Orientierungslosigkeit ($PV_n$) geschätzt, zu aktualisieren.

10. Digitales Tablet (12) oder Mobiltelefon, das die Vorrichtung zum Schätzen einer Orientierung (RRT) einer Bahn (T) nach Anspruch 9 umfasst. Wobei der Bewegungssensor (22), die Speichermittel (32) und der Rechner (38) sind in dieses digitale Tablet oder dieses Mobiltelefon integriert.

**Claims**

1. A method for estimating an orientation ($R_{RT}$) of a path (T) followed by a carrier (10) of a movement sensor (22), comprising the following steps:

- determining (100) an orientation ($R_{ST}$) of the movement sensor (22) with respect to the path (T) followed by the carrier (10),
- estimating (102) an orientation ($R_{RS}$) of the movement sensor (22) with respect to a fixed reference (14R) linked to the terrestrial reference frame by means of measurements supplied by the sensor, and
- estimating (104) an orientation ($R_{RT}$) of the path (T) followed by the carrier (10) with respect to the fixed reference (14R) by means of the determined orientation ($R_{ST}$) of the movement sensor (22) with respect to the path (T) and the estimated orientation ($R_{RS}$) of the movement sensor (22) with respect to the fixed reference (14R),

**characterized in that** it further comprises the following steps:

- detecting (110) a start ($t_1$) and end ($t_2$) of a phase (PVn) of disorientation of the movement sensor (22) with respect to the path (T), and
- updating (112), after the detected end ($t_2$) of the disorientation phase ($PV_n$), the determined orientation ($R_{ST}$) of the movement sensor (22) with respect to the path (T) by means of the orientation ($R_{RT}$) of the path (T) with respect to the fixed reference (14R) as estimated at the detected start ($t_1$) of the disorientation phase ($PV_n$) and the orientation ($R_{RS}$) of the movement sensor (22) with respect to the fixed reference (14R) as estimated after the detected end ($t_2$) of the disorientation phase ($PV_n$).

2. The method for estimating an orientation (RRT) of a path (T) according to claim 1, wherein a prior value of the orientation (RST) of the movement sensor (22) with respect to the path (T) is predetermined (100) by recording a value entered by a user or known by default.

3. The method for estimating an orientation (RRT) of a path (T) according to claim 1, wherein:

- a plurality of prior values of the orientation ($R_{ST}$) of the movement sensor (22) with respect to the path (T) are predetermined (100) by recording values entered by a user or known by default, each prior value being associated with a possible predetermined placement of the sensor (22), and
- one of these prior values is selected (100) by means of measurements supplied by the sensor (22) and characteristics of the various possible predetermined placements of the sensor.

4. The method for estimating an orientation (RRT) of a path (T) according to claim 1, wherein a prior value of the orientation (RST) of the movement sensor (22) with respect to the path (T) is determined by estimation by means of a known prior value of the orientation (RRT) of the path (T) with respect to the fixed reference (14R) and the orientation (RRS) of the movement sensor (22) with respect to the fixed reference (14R) as estimated at an initial instant.

5. The method for estimating an orientation (RRT) of a path (T) according to any one of claims 1 to 4, further comprising the following steps:

- estimating (106) a speed of the carrier (10) by means of measurements supplied by the sensor (22), and
- reconstructing (108) the path (T) followed by the carrier (10) by means of the estimated speed of the carrier and the estimated orientation ($R_{RT}$) of the path (T) followed by the carrier (10) with respect to the fixed reference (14R).

6. The method for estimating an orientation (RRT) of a path (T) according to claim 5, wherein, the movement sensor (22) comprising an accelerometer (24) with three measurement axes, a magnetometer (26) with three measurement axes and a gyrometer (28) with three measurement axes:

- the orientation ($R_{RS}$) of the movement sensor (22) with respect to the fixed reference (14R) is estimated (102) by means of the measurements supplied by the accelerometer (24), the magnetometer (26) and the gyrometer (28), and
- the speed of the carrier (10) is estimated (106) by means of the measurements supplied by the accelerometer (24).

7. The method for estimating an orientation (RRT) of a path (T) according to any one of claims 1 to 6, wherein the orientation (RRS) of the movement sensor (22) with respect to the fixed reference (14R) as estimated after the detected end (t2) of the disorientation phase (PVn) is an averaged or filtered value so as to reduce an effect of parasitic fluctuations of the movement of the carrier (10).

8. Computer program, downloadable from a communication network and/or recorded on a medium that can be read by a computer and/or executed by a processor, comprising instructions for executing the steps of an orientation estimation method according to any one of claims 1 to 7, when said program is executed on a computer.

**9.** Device for estimating an orientation (RRT) of a path (T) followed by a carrier (10), comprising:

- a movement sensor (22) intended to be carried by the carrier (10),
- means (32) for storing an orientation value ($R_{ST}$) of the movement sensor (22) with respect to the path (T) followed by the carrier (10), and
- a computer (38) connected to the movement sensor (22) and to the storage means (32), programmed to:

• estimate an orientation ($R_{RS}$) of the movement sensor (22) with respect to a fixed reference (14R) related to the terrestrial reference frame by means of measurements supplied by the carrier, and

• estimating an orientation ($R_{RT}$) of the path (T) followed by the carrier (10) with respect to the fixed reference (14R) by means of the stored orientation value ($R_{ST}$) of the movement sensor (22) with respect to the path (T) and the estimated orientation ($R_{RS}$) of the movement sensor (22) with respect to the fixed reference (14R),

**characterized in that** it further comprises a detector (30) for a start ($t_1$) and end ($t_2$) of a phase ($PV_n$) of disorientation of the movement sensor (22) with respect to the path (T), and **in that** the computer (38) is also programmed to update, after the detected end ($t_2$) of the disorientation phase ($PV_n$), the stored orientation value ($R_{ST}$) of the movement sensor (22) with respect to the path (T) by means of the orientation ($R_{RT}$) of the path (T) with respect to the fixed reference (14R) as estimated at the detected start ($t_1$) of the phase of disorientation ($PV_n$) and the orientation ($R_{RS}$) of the movement sensor (22) with respect to the fixed reference (14R) as estimated after the detected end ($t_2$) of the disorientation phase ($PV_n$).

**10.** A digital tablet (12) or a cellphone comprising the device for estimating an orientation (RRT) of a path (T) according to claim 9. The movement sensor (22), the storage means (32) and the computer (38) being integrated in this digital tablet or cellphone.

16

## Figure 1

## Figure 2

## Figure 3

## Figure 4

**EP 2 986 939 B1**

## RÉFÉRENCES CITÉES DANS LA DESCRIPTION

**Documents brevets cités dans la description**

- US 20120072166 A1